# EUROPEAN PATENT SPECIFICATION

(11) **EP 0 498 513 B1**
(45) Date of publication and mention of the grant of the patent: **17.05.1995**
(21) Application number: 92200352.0
(22) Date of filing: 07.02.1992
(51) Int. Cl.: A23L 1/317

(54) **Method of preparing simulated adipose tissue for use in meat products**
Verfahren zur Herstellung von simuliertem Fettgewebe zur Verwendung in Fleischwarenartikeln
Procédé de préparation de tissu adipeux simulé et utilisation pour produit de viande

(30) Priority: 08.02.1991 NL 9100230
(43) Date of publication of application: 12.08.1992
(73) Proprietor: van Schouwenburg, Gerrit A., NL-8101 CR Raalte (NL)
(72) Inventor: van Schouwenburg, Gerrit A., NL-8101 CR Raalte (NL)
(74) Representative: Bruin, Cornelis Willem

(56) References cited:
- CA-A- 117 356
- CA-A- 1 120 774
- NL-A- 8 001 969

## Description

This invention relates to a method of preparing simulated adipose tissue for use in meat products, in particular (dry) sausage and other processed meats.

Adipose tissue is used in many meat products, in particular in various kinds of sausage, to give the meat a particular pattern or to coat the product. Examples are pork luncheon meat [a (patterned) meat product typically used as a sandwich filling], mortadella, salami and *Berlinerworst* [a meat product coated with adipose tissue, typically used as a sandwich filling]. In many cases the adipose tissue gives a product its typical appearance. Further, the adipose tissue influences the taste of a meat product and/or provides it with a protection against drying out. Also, precisely the presence of small bits of adipose tissue in dry sausage has a great influence on the drying of this product.

For the above-mentioned functions to be fulfilled, each type of product requires a specific amount of adipose tissue. Further, fat is used in sausage dough to obtain the desired texture and creaminess and, in addition, bits of adipose tissue are added to obtain the desired pattern of adipose tissue. As a result, most types of sausage have a fairly high fat content, for instance in the range of 30-40% by weight.

In view of the increasing demand for low-fat products, such a fat content is sometimes objectionable. As will appear from the foregoing, products of lower fat content cannot be obtained simply by using less adipose tissue since in that case the typical characteristics of the various products are lost. Accordingly, there is a need for a method by means of which meat products of a lower fat content can be manufactured while maintaining the typical characteristics of these meat products, in particular as regards the appearance and the pattern of these products.

An additional problem involved in the use of adipose tissue is encountered when the adipose tissue is utilized as a barding adipose tissue, as in the case of *Berlinerworst*, for instance. The slabs of adipose tissue necessary for this purpose must often have relatively large dimensions and are often difficult to cut from the adipose tissue layer of pigs. This is associated with the above-mentioned demand for meat of lower fat content, in view of which the pigs are fattened to a lesser extent and hence the layer of adipose tissue is thinner. In addition, the fat content of the barding adipose tissue contributes considerably to the fat content of the finished product. Accordingly, there is a need for a method of preparing barding adipose tissue in any desired amount and of any dimensions, having a fat content which, if so desired, may be lower than that of natural barding adipose tissue, i.e., of the slabs of adipose tissue that are cut directly from the adipose tissue layer of a pig.

It is an object of the invention to provide for the need outlined above. To that end, according to the invention, a method of the type described hereinabove is characterized in that a firm emulsion is made from animal fat and water using a suitable emulsifier, which emulsion can be processed as natural adipose tissue and replace the visual adipose tissue of meat products.

It is observed that Netherlands patent application 8001969 discloses a method of preparing barding adipose tissue for meat products, in which finely cut adipose tissue is mixed with caseinate and, after addition of milk and/or water, is heated to a temperature of 60°C or more. Then, chicken egg, potato starch and gelatin are added and the mixture so obtained is placed in a mould and further heated to a temperature above 70°C. After the mixture has been cooked, it is cooled, removed from the mould and cut into slabs or sheets of the desired thickness. An objection to this known method is that it involves the use of nonmeat proteins, as a consequence of which the functional properties of the reconstituted adipose tissue deviate from those of natural adipose tissue. Moreover, the use of nonmeat proteins in meat products is against government regulations in many countries.

According to the present invention, by contrast, only meat proteins need to be used, for instance collagen protein with strong emulsifying properties, a large water-binding capacity and strong gelling properties.

It is further observed that fat emulsions have been used in luncheon meat products for years now. According to the known technique, fat and water are emulsified with lean meat and/or rind as emulsifiers. The resulting paste is added to the sausage dough during cutting. The paste is fully integrated into the sausage dough and is not recognizable or traceable as such.

This method is used in inexpensive formulations for luncheon meat-type products since otherwise fat or jelly is deposited during cooking. This known emulsion, however, cannot serve to replace the visual adipose tissue which otherwise provides the pattern of the product.

The emulsion of the present invention can be made in a manner that is known per se for meat products by finely dividing and mixing water and fat together with the emulsifier in a suitable device for that purpose, such as a bowl chopper. A very fine distribution can be obtained by using a colloid mill or a so-called microcutter or homogenizer. During this operation, an elevated temperature of about 50-60°C improves the emulsifying effect and hence the heat stability of the adipose tissue. According to the invention, a coldsetting gelling meat protein is used as an emulsifier, so that upon cooling a firm mass is obtained which can be cut into small bits or slabs in the usual manner.

It is of importance that the meat protein has strong emulsifying and gelling properties (Bloomgrams in excess of 250, for instance) and a great water-binding capacity, so that in fact a firm or even hard emulsion is obtained which can be processed in a manner similar to that in which ordinary adipose tissue is obtained, including such operations as cutting, grinding, mixing, cooking and stuffing. Owing to the gelling properties of the emulsifier, a network or matrix is obtained in which the fat globules are entrapped. Meat proteins that can be used include a partially hydrolyzed rind protein or a mixture of partially hydrolyzed rind proteins or a fractionated rind protein which may or may not be mixed with partially hydrolyzed rind proteins.

The functional properties of the emulsion can be influenced by varying the amounts of fat, water, and protein, but also by adding rind, (modified) starches, other hydrocolloids and meat. The type of fat also influences the functional properties, in particular its melting point, the (collagen) protein it contains and any meat protein adherent to the fat. The processing also plays a part in respect of the functional properties and the stability of the emulsion. Temperature and shear forces during emulsification are variables that may have a great influence on the end product.

For each particular use, the fat/water emulsion must satisfy specific requirements which mostly deviate from the requirements that apply to other uses.

In the preparation of luncheon meat, the firm emulsion prepared in accordance with the invention is cut into little pieces which are added to the sausage dough. The emulsion must be sufficiently firm to resist the mechanical forces of the production process, retain its form during cooking and have a soft texture after cooling. It must retain its bright whiteness after cooking and must not smear when being sliced.

The same functional properties apply to mortadella, although the adipose tissue must have a slightly firmer texture.

The required functional properties are clearly different for dry types of sausage. The emulsion must not smear during processing, while in the end product the fat must melt slightly on the tongue. Further, the pattern is of great importance and the emulsion also plays a great role in the drying process.

An important aspect of the invention is that the emulsion can be prepared so as to have a fat content that is considerably lower than the fat content of natural adipose tissue. The fat content of natural adipose tissue is 80-90%. An emulsion according to the invention can without any problem be so prepared as to have a fat content of, for instance, 30-50%, without changing the other characteristic properties of the end product. Accordingly, the invention enables the simple manufacture of low-fat meat products, in particular meat products such as sausage and the like, without changing the typical appearance or typical pattern of the products.

Thus, the method according to the invention enables the preparation of dry sausage products such as salami, *metworst*, *snijworst*, of normal appearance and taste and a fat content of 12-18% instead of 30-40% as is conventional.

It may sometimes be desirable for the adipose tissue emulsion to have more internal cohesiveness, in particular in hot conditions when the gel formed by the protein emulsifier weakens or loses its cohesion. This can be achieved by providing a second matrix which also retains the fat globules in hot conditions. Although a great number of thickening agents are available for this purpose, again a consideration that plays a role is the fact that government regulations do not offer much choice where meat and meat products are concerned. Such a second matrix, however, can be realized very appropriately with a heat-coagulating protein, for instance by adding 5-20% by weight of lean meat finely chopped with water and salt, or, in stead, if permitted, egg, egg powder or egg fractions. The heating for stabilizing the second matrix can be effected in a separate step during the preparation of the emulsion, but can also be effected when the emulsion has been processed in the end product and in that case can advantageously be combined with a heating step which is required anyway for the preparation of some end products.

According to a further elaboration of the concept of the invention, it is also possible to fabricate adipose tissue slabs which can be used as barding adipose tissue. To that end, the emulsion can be fabricated for instance in a suitable block shape and cut into slices after cooling. It is also possible to mould the emulsion directly in the form of individual slabs. It is important that the barding adipose tissue permits easy handling, has a reasonable tensile strength and good bonding properties. During cooking, the emulsion must not "desintegrate" and further the barding adipose tissue must still be bright white after heat treatment. A good cohesiveness and firmness are important for barding adipose tissue. According to the invention, the firmness of adipose tissue slabs formed from an emulsion can be enhanced by adding solubilized proteins from meat to the emulsion, for instance by strongly reducing meat with water and salt, or by using fat that already contains some adherent meat. When meat is used in amounts of about 5-20% by weight, preferably about 10% by weight, upon heating a protein matrix is formed which retains the emulsified fat globules and gives additional firmness to the adipose tissue slab. Such slabs can be fabricated with an apparatus as disclosed in Netherlands patent application 8901672.

An emulsion according to the invention can also be used with advantage in the preparation of meat products in thin slices as disclosed in European patent 0164372, disclosing a method for manufacturing thin slices of ready-to-eat meat products from meat dough, in which a heat treatment is necessary to give the slices the desired cohesiveness and firmness. When using natural adipose tissue to obtain the desired adipose tissue pattern and taste, there is a chance such adipose tissue will at least partly melt out when heat-treated, so that the slices of meat might be covered with a thin layer of fat. Also, a small hole might be formed in the slice of meat at the point where a piece of adipose tissue has melted. However, in preparing an emulsion according to the invention, the properties thereof can simply be chosen such that the bits of reconstituted adipose tissue formed from the emulsion will not melt at the temperatures necessary for the heat treatment.

Another aspect of the invention is that instead of animal fat, other fats or oils can be used, such a maize oil, soy bean oil, etc., or combinations of oils. This method enables the preparation of meat products having a "more wholesome" fatty acid composition.

Specified hereinafter, by way of example, are three formulations for making simulated adipose tissue according to the invention, a formulation for making adipose tissue slabs and a formulation for making dry sausage utilizing the simulated adipose tissue according to the invention.

### Formulation 1

9 parts of fat (ham slab fat)
8 parts of water
1 part of meat protein emulsifier
Chop the fat with protein and heat to 60-100°C (in a cooking bowl chopper). Add water (60-100°C) and continue chopping until a white creamy emulsion of a final temperature of 40-45°C is obtained. Allow to cool and set in blocks. Optionally, a part of the water can be added as ice.

### Formulation 2

9 parts of fat (lard)
16 parts of water
1 part of meat protein emulsifier
0.3 parts of salt
Instructions as in Formulation 1.

### Formulation 3

16 parts of fat (lard, vegetable fat)
15 parts of water
1 part of meat protein emulsifier
Instructions as in Formulation 1.

### Formulation of adipose tissue slab

As in Formulation 2, with an additional three parts of lean meat.
With salt and three parts of water, the meat is chopped into a very fine paste. An emulsion is made as described in Formulation 1. Meat paste is added at the end and chopped through the emulsion. The emulsion is rolled or extruded into a 1-2 mm thick layer and allowed to set.

Dry sausage: Salami

| composition: | | | | |
|---|---|---|---|---|
| (1) lean | | beef | 15 kg | -5/-10°C |
| (2) lean | | pork | 60 kg | -5/-10°C |
| (3) fat emulsion according to Formulation 2 | | | 25 kg | 0/2°C |
| (4) Additives: | a. common salt | | | 2.0 kg |
| | b. nitrite brine (0.6%) | | | |
| | c. saltpeter | | | 0.02-0.05 kg |
| | d. sugar | | | 1.0 kg |
| | e. starter culture | | | as required |
| | f. herbs/spices | | | as required |
| | g. sodium ascorbate | | | 0.05 kg |

Comminute components (1) and (2) together in a bowl chopper in one operation, add component (3) in 50 mm lumps and chop the assembly to the desired fineness (2-3 mm). The additives are added at the end of the process and the cutter continues to rotate until they are distributed homogeneously. The temperature of the dough must then be 2-4°C.

The dough is firmly packed into an air-permeable casing with a vacuum stuffing box; casing size 70-90 mm. Then the sausages are ripened at a relative humidity R.H. of 95% decreasing to 85% when ripened.

The sausages are smoked at a R.H. of 80-85%; the final ripening is eventually obtained at a temperature of 15°C and a final R.H. of 75%.

## Claims

1. A method of preparing simulated adipose tissue for use as visible adipose tissue in meat products, wherein an emulsion is prepared from fat, water and an emulsifier, **characterized** in that the fat is animal fat and that the emulsifier is a strongly and coldsetting gelling meat protein whereby a firm emulsion is obtained which can be processed in the same manner and with similar results as natural adipose tissue in order to replace the visible adipose tissue in meat products.

2. A method according to claim 1, characterized in that the meat protein comprises a partially hydrolyzed or fractionated rind protein.

3. A method according to claim 2, characterized in that the meat protein comprises a mixture of partially hydrolyzed and/or fractionated rind proteins.

4. A method according to any one of the preceding claims, characterized in that the emulsion is made by finely dividing and mixing water and fat together with an emulsifier in an apparatus suitable for the purpose, in such a manner that a temperature of at least 50-60°C is achieved, and that the emulsion obtained is subsequently allowed to cool to form a firm mass.

5. A method according to any one of the preceding claims, characterized in that the amount of fat is chosen to be such that the fat content of the emulsion is lower than the fat content of natural adipose tissue.

6. A method according to claim 5, characterized in that the emulsion has a fat content between 30 and 75% by weight.

7. A method according to any one of claims 1-6, characterized in that a collagen protein is used as meat protein.

8. A method according to any one of the preceding claims, characterized in that substances are added to the emulsion which form a matrix that has a stabilizing effect during heating.

9. A method according to claim 8, characterized in that the matrix is a protein matrix.

10. A method according to claim 9, characterized in that the protein matrix is formed by heating the emulsion or the end product formed therewith.

11. A method according to claim 9 or 10, characterized in that the protein matrix is obtained by adding stabilizing meat proteins.

12. A method according to claim 9 or 10, characterized in that the protein matrix is obtained by adding egg, egg powder or egg fractions.

13. A method according to any one of the preceding claims, characterized in that the animal fat is replaced at least partly by other fats or oils.

14. A method according to any one of the preceding claims, characterized in that in the preparation of the emulsion bits of finely reduced rind are added.

15. A method according to any one of the preceding claims, characterized in that in the preparation of the emulsion starch is added.

16. A method according to any one of the preceding claims, characterized in that slabs are formed from the firm emulsion, which slabs can be used as barding adipose tissue.

17. A method according to claim 16, characterized in that the firm emulsion comprises between 5 and 20% by weight of meat particles.

18. A method according to claim 17, characterized in that the firm emulsion comprises about 10% of meat particles.

19. A method for preparing a meat product from meat emulsion or meat, characterized in that particles of a fat emulsion according to any one of claims 1-18 are added to the meat emulsion or meat.

20. A method according to claim 18, characterized in that meat or meat emulsion together with a block of the fat emulsion is processed in a bowl chopper.

## Patentansprüche

1. Ein Verfahren zum Herstellen von nachgeahmten Fettgewebe zur Verwendung als sichtbares Fettgewebe in Fieischprodukten, wobei eine Emulsion aus Fett, Wasser und einem Emulgator hergestellt wird, dadurch gekennzeichnet, daß das Fett ein tierisches Fett ist und daß der Emulgator ein stark und kalthärtendes gelierendes Fleischprotein ist, wodurch eine erste Emulsion erhalten wird, die auf gleiche Weise und mit gleichen Ergebnisssen wie natürliches Fettgewebe verarbeitet werden kann, um das sichtbare Fettgewebe in Fleischprodukten zu ersetzen.

2. Ein Verfahren nach Anspruch 1, dadurch gekennzeichnet, daß das Fleischprotein ein teilweise hydrolysiertes oder fraktioniertes Rinderprotein umfasst.

3. Ein Verfahren nach Anspruch 2, dadurch gekennzeichnet, daß das Fleischprotein eine Mischung von teilweise hydrolysierten und/oder fraktionierten Rinderproteinen umfasst.

4. Ein Verfahren nach einem der vorhergehenden Ansprüche, dadurch gekennzeichnet, daß die Emulsion dadurch hergestellt wird, daß man Wasser und Fett fein verteilt und zusammen mit einem Emulgator in einem für diesen Zweck geeeigneten Gerät auf solche Weise mischt, daß daß eine Temperatur von wenigstens 50-60°C erreicht wird und daß man die erhaltene Masse danach abkühlen läßt, um eine feste Masse zu erhalten.

5. Ein Verfahren nach einem der vorhergehenden Ansprüche, dadurch gekennzeichnet, daß die Menge an Fett so gewählt ist, daß der Fettgehalt der Emulsion niedriger als der Fettgehalt von natürlichem Fettgewebe ist.

6. Ein Verfahren nach Anspruch 5, dadurch gekennzeichnet, daß die Emulsion einen Fettgehalt zwischen 30 und 75 Gew.-% besitzt.

7. Ein Verfahren nach einem der Ansprüche 1-6, dadurch gekennzeichnet, daß ein Kollagenprotein als Fleischprotein verwendet wird.

8. Ein Verfahren nach einem der vorhergehenden Ansprüche, dadurch gekennzeichnet, daß die Substanzen der Emulsion zugesetzt werden, die eine Matrix bilden, die einen stabilisierenden Effekt während des Erwärmens besitzt.

9. Ein Verfahren nach Anspruch 8, dadurch gekennzeichnet, daß die Matrix eine Proteinmatrix ist.

10. Ein Verfahren nach Anspruch 9, dadurch gekennzeichnet, daß die Proteinmatrix dadurch gebildet wird, daß man die Emulsion oder das damit gebildete Endprodukt erhitzt.

11. Ein Verfahren nach Anspruch 9 oder 10, dadurch gekennzeichnet, daß die Proteinmatrix dadurch erhalten wird, daß man stabilisierende Fleischproteine zusetzt.

12. Ein Verfahren nach Anspruch 9 oder 10, dadurch gekennzeichnet, daß die Proteinmatrix dadurch erhalten wird, daß man Ei, Eipulver oder Eifraktionen zusetzt.

13. Ein Verfahren nach einem der vorhergehenden Ansprüche, dadurch gekennzeichnet, daß das tierische Fett wenigstens teilweise durch andere Fette oder Öle ersetzt wird.

14. Ein Verfahren nach einem der vorhergehenden Ansprüche, dadurch gekennzeichnet, daß bei der Herstellung der Emulsion Stücke oder fein zerkleinertes Rind zugesetzt werden.

15. Ein Verfahren nach einem der vorhergehenden Ansprüche, dadurch gekennzeichnet, daß bei der Herstellung der Emulsion Stärke zugesetzt wird.

16. Ein Verfahren nach einem der vorhergehenden Ansprüche, dadurch gekennzeichnet, daß aus der stabilen Emulsion Formstücke geformt werden, wobei die Formstücke als stückiges Fettgewebe verwendet werden können.

17. Ein Verfahren nach Anspruch, dadurch gekennzeichnet, daß die stabile Emulsion zwischen 5 und 20 Gew.-% an Fleischteilchen enthält.

18. Ein Verfahren nach Anspruch, dadurch gekennzeichnet, daß die stabile Emulsion etwa 10 Gew.-% an Fleischteilchen enthält.

19. Ein Verfahren zum Herstellen eines Fleischproduktes aus einer Fleischemulsion oder Fleisch, dadurch gekennzeichnet, daß Teilchen einer Fettemulsion nach einem der Ansprüche 1-18 der Fleischemulsion oder Fleisch zugesetzt werden.

20. Ein Verfahren nach Anspruch 18, dadurch gekennzeichnet, daß Fleisch oder eine Fleischemulsion zusammen mit einem Block der Fettemulsion in einem Schalenzerhacker verarbeitet werden.

## Revendications

1. Procédé de préparation de tissu adipeux simulé destiné à être utilisé comme tissu adipeux visible dans des produits de boucherie, selon lequel une émulsion est préparée à partir de graisse, d'eau et d'un émulsifiant, caractérisé en ce que la graisse est de la graisse animale et en ce que l'émulsifiant est une protéine de viande à gélification forte et ayant une prise à froid, une émulsion consistante étant obtenue, qui peut être traitée de la même manière et avec des résultats similaires à un tissu adipeux naturel afin de remplacer le tissu adipeux visible dans des produits de boucherie.

2. Procédé selon la revendication 1, caractérisé en ce que la protéine de viande comprend une protéine de couenne partiellement hydrolysée ou fractionnée.

3. Procédé selon la revendication 2, caractérisé en ce que la protéine de viande comprend un mélange de protéines de couenne partiellement hydrolysées et/ou fractionnées.

4. Procédé selon l'une quelconque des revendications précédentes, caractérisé en ce que l'émulsion est fabriquée en divisant finement et en mélangeant ensemble de l'eau et de la graisse avec un émulsifiant, dans un appareil convenant à cet effet, de telle manière qu'une température d'au moins 50-60°C est atteinte, et que l'émulsion obtenue est ensuite laissée refroidir pour former une masse consistante.

5. Procédé selon l'une quelconque des revendications précédentes, caractérisé en ce que la quantité de graisse est choisie telle que la teneur en graisse de l'émulsion est inférieure à la teneur en graisse du tissu adipeux naturel.

6. Procédé selon la revendication 5, caractérisé en ce que l'émulsion a une teneur en graisse comprise entre 30 et 75 % en poids.

7. Procédé selon l'une quelconque des revendications 1 à 6, caractérisé en ce qu'une protéine de collagène est utilisée comme protéine de viande.

8. Procédé selon l'une quelconque des revendications précédentes, caractérisé en ce que des substances sont ajoutées à l'émulsion, qui forment une matrice qui a un effet stabilisateur pendant le chauffage.

9. Procédé selon la revendication 8, caractérisé en ce que la matrice est une matrice de protéines.

10. Procédé selon la revendication 9, caractérisée en ce que la matrice de protéines est formée en chauffant l'émulsion ou le produit final formé en même temps.

11. Procédé selon la revendication 9 ou 10, caractérisé en ce que la matrice de protéines est obtenue en ajoutant des protéines de viande stabilisatrices.

12. Procédé selon la revendication 9 ou 10, caractérisé en ce que la matrice de protéines est obtenue en ajoutant de l'oeuf, de la poudre d'oeuf ou des fractions d'oeuf.

13. Procédé selon l'une quelconque des revendications précédentes, caractérisé en ce que la graisse animale est remplacée au moins en partie par d'autres graisses ou huiles.

14. Procédé selon l'une quelconque des revendications précédentes, caractérisé en ce que, dans la préparation de l'émulsion, des morceaux de couenne finement réduits sont ajoutés.

15. Procédé selon l'une quelconque des revendications précédentes, caractérisé en ce que de l'amidon est ajouté dans la préparation de l'émulsion.

16. Procédé selon l'une quelconque des revendications précédentes, caractérisé en ce que des tranches sont formées à partir de l'émulsion consistante, lesquelles tranches peuvent être utilisées comme tissu adipeux de bardage.

17. Procédé selon la revendication 16, caractérisé en ce que l'émulsion consistante comprend entre 5 et 20 % en poids de particules de viande.

18. Procédé selon la revendication 17, caractérisé en ce que l'émulsion consistante comprend environ 10 % de particules de viande.

19. Procédé de préparation d'un produit de boucherie à partir d'une émulsion de viande ou à partir de viande, caractérisé en ce que des particules d'une émulsion de graisse selon l'une quelconque des revendications 1 à 18 sont ajoutées à l'émulsion de viande ou à la viande.

20. Procédé selon la revendication 18, caractérisé en ce que la viande ou l'émulsion de viande est traitée avec un bloc de l'émulsion de graisse dans un hachoir à bol.
